Europäisches Patentamt

European Patent Office

Office européen des brevets

(19)

(11) **EP 1 138 965 A1**

(12) **EUROPEAN PATENT APPLICATION**

(43) Date of publication:
**04.10.2001 Bulletin 2001/40**

(51) Int Cl.⁷: **F16C 33/38**

(21) Application number: **01303135.6**

(22) Date of filing: **02.04.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **31.03.2000 JP 2000097027**

(71) Applicant: **THK Co., Ltd.**
**Shinagawa-ku, Tokyo (JP)**

(72) Inventors:
• **Michioka, Hidekazu, c/o THK Co., Ltd**
**Shinagawa-ku, Tokyo (JP)**

• Abe, Yasuyuki, c/o THK Co., Ltd.
Shinagawa-ku, Tokyo (JP)
• Nishimura, Kentarou, c/o THK Co., Ltd.
Shinagawa-ku, Tokyo (JP)
• Tamura, Kiyomi, c/o THK Co., Ltd.
Shinagawa-ku, Tokyo (JP)
• Niwa, Hiroshi, c/o THK Co., Ltd.
Shinagawa-ku, Tokyo (JP)

(74) Representative: **Hague, Alison Jane**
**Frank B. Dehn & Co.,**
**European Patent Attorneys,**
**179 Queen Victoria Street**
**London EC4V 4EL (GB)**

(54) **Rolling element spacer in a rolling guide device and a rolling guide apparatus incorporating rolling element spacers**

(57) There is provided a rolling element spacer (5) used in a rolling guide device having an endless circulation passage (6) for balls (2), arranged alternately with many balls (2) in the endless circulation passage (6), and circulating together with the balls (2) in the endless circulation passage (6). In order to prevent the rolling element spacer (5) from falling sideways and avoid a problem such as malfunction of the rolling guide device, the rolling element spacer (5) is formed such that its diagonal dimension (A) in a thickness direction becomes larger than an inner diameter ($\phi D$) of the endless circulation passage (6).

Fig.4

## Description

The present invention relates to a rolling element spacer which, in various rolling guide devices each having an endless circulation passage for balls such as a linear guide device and a ball screw device, is interposed between the mutually adjoining balls in the endless circulation passage and reduces friction between the balls and heat generation to thereby smoothen the rolling thereof. The invention also relates to a rolling guide apparatus incorporating such rolling element spacers.

Hitherto, as a rolling guide device in which a pair of members continuously perform a relative motion through an endlessly circulating ball row, there have been known devices such as a linear guide device which is used in a linear guide portion in a machine tool, a carrying device and the like which guides a movable body such as a table on a stationary portion such as a bed or a saddle, and a ball screw which is used together with this linear guide device and which gives to the movable body a stroke of linear motion corresponding to a rotation amount of a motor.

The former linear guide device comprises a bearing rail which is disposed on the stationary portion and in which a rolling groove for the balls is formed along a longitudinal direction, and a sliding base which has a load rolling groove facing the rolling groove of the bearing rail through many balls and in which there is formed an endless circulation groove for the balls rolling on the load rolling groove, and it is constituted such that, in accompaniment with the endless circulation of the balls, the sliding base supporting the movable body continuously performs linear motion along the bearing rail. Further, reversely to this, there is known an arrangement constituted such that the bearing rail is moved relative to the fixed sliding base.

On the other hand, the latter ball screw comprises a screw shaft in which there is formed a spiral ball rolling groove with a predetermined lead, and a nut member which has a load rolling groove facing the ball rolling groove through many balls and in which there is formed an endless circulation passage for the balls rolling on the load rolling groove, the arrangement being constituted such that, in accompaniment with a relative rotation motion between the screw shaft and the nut member, the balls circulate in the endless circulation passage, and the nut member and the screw shaft relatively move in an axial direction.

On the other hand, in such a rolling guide device, since each individual ball circulating in the endless circulation passage mutually contacts with the balls positioned before and after it, in a case where it is used at a high speed, there have been fears such that, besides the fact that the balls become worn in a relatively short time for instance by friction between the balls, a disadvantage arises that a ball or the load rolling groove generates a seizure owing to friction heat. Therefore, as one solution for such a drawback, in Japanese Patent Laid-Open No. 315835/1999 Gazette, there is disclosed a rolling guide device in which a rolling element spacer is interposed between mutually adjoining balls in the endless circulation passage.

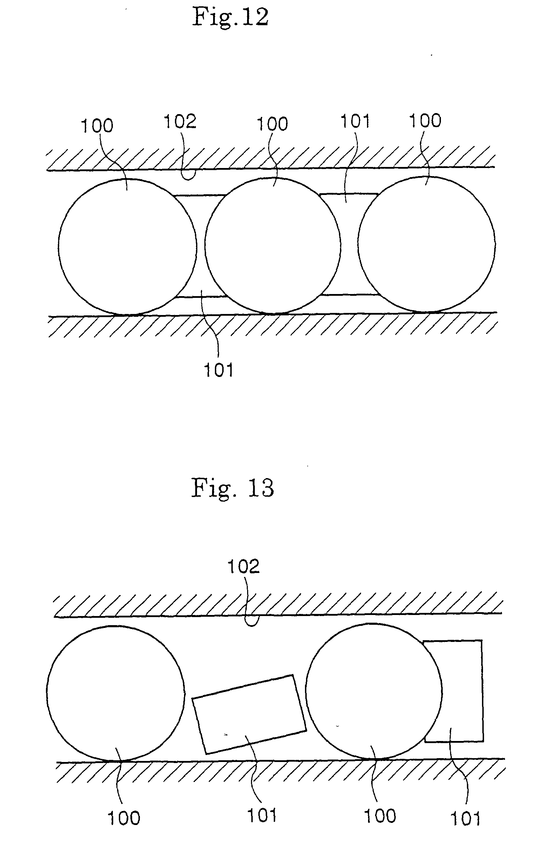

The rolling guide device disclosed in the above Gazette is arranged such that a synthetic resin made rolling element spacer referred to as separator is arranged alternately with each ball in the endless circulation passage, thereby preventing the balls from mutually contacting. Such a separator is formed in a disk-like form whose outer diameter is smaller than a diameter of each ball and, in both its front/rear faces contacting with the balls, there are formed spherical face seats whose curvatures are larger than a curvature of a spherical face of the ball. By this, as shown in Fig.12, if the balls 100 and the separators 101 are alternately arranged without a gap in the endless circulation passage 102, each separator 101 adopts a state of being sandwiched between a pair of balls 100, 100 adjoining both its front/rear faces, so that it circulates in the endless circulation passage 102 together with the balls 100 while being held in its predetermined attitude.

However, it is difficult to arrange the balls 100 and the spacers 101 without a gap in the endless circulation passage 102 provided in the rolling guide device. Further, if an accumulated use time of such a rolling guide device is increased, a gap is generated between the balls 100 and the rolling element spacers 101 by wear. In a case that the gap between the rolling element spacers 101 and the balls 100 cannot be removed in this manner and the gap is generated resultantly, the attitude of a rolling element spacer 101 becomes unstable as shown in Fig. 13, so that there is a fear that it falls sideways between the balls 100 in the endless circulation passage 102.

And, in a case that a rolling element spacer has fallen sideways in this manner, since a movement of the rolling element spacer is not restrained by the adjacent balls, the rolling element spacer is separated from the balls to spring out of the endless circulation passage and, in case of the ball screw device for instance, it is discharged outside from between a screw shaft and a nut member. Further, if one of the rolling element spacers drops out in this manner, the gap between the balls and the remaining rolling element spacers in the endless circulation passage widens increasingly, so that the rolling element spacers drop out one after another from the endless circulation passage.

On the other hand, if a rolling element spacer falls sideways in the endless circulation passage, since the balls attempt to run on this rolling element spacer, the balls are clogged without circulating in the endless circulation passage and, in the ball screw device for instance, there is a fear that the nut member is locked to the screw shaft, so that operation becomes impossible.

The invention has been made in view of such a problem, and an object is to prevent the rolling element spacers arranged together with the balls in the endless circulation passage from falling sideways in the endless circulation passage, thereby providing a rolling element spacer capable of avoiding such a problem that the rolling element spacer drops out of the endless circulation passage and the rolling guide device becomes impossible to operate.

In order to address the above object, viewed from one aspect the invention provides a rolling element spacer used in a rolling guide device in which a pair of members perform a relative continuous motion through an endlessly circulating ball row, said rolling element spacer being interposed between mutually adjoining balls in an endless circulation passage of said rolling guide device, and circulating together with the balls, characterized in that a diagonal dimension of said rolling element spacer in a thickness direction is larger than an inner diameter of said endless circulation passage.

According to such a technical means, since the rolling element spacer arranged in the endless circulation passage is formed such that the diagonal dimension of the rolling element spacer in the thickness direction, i.e., a diagonal dimension between both front/rear faces contacting with a pair of balls, is larger than an inner diameter of the endless circulation passage provided in the rolling guide device, even if a gap is generated between a ball and the rolling element spacer and thus the rolling element spacer slants in the endless circulation passage, the rolling element spacer does not fall sideways completely because its corner portions engage with an inner wall of the endless circulation passage, so that it is restored to an original attitude, i.e., a stable state in which it is sandwiched by the balls from both sides while it circulates together with the balls. By this, it is possible to avoid such difficulties that the rolling element spacer drops out of the endless circulation passage and that the balls are clogged in the endless circulation passage.

According to rolling element spacers in accordance with the invention, by setting the diagonal dimension in the thickness direction of the rolling element spacer larger than the inner diameter of an endless circulation passage provided in a rolling guide device in which the rolling element spacer operates, even if the rolling element spacer slants in the endless circulation passage, such a drawback that this rolling element spacer falls sideways between the balls can be prevented, so that it becomes possible to avoid such a problem that the rolling guide device itself becomes impossible to operate owing to the fact that the rolling element spacer, which has fallen sideways and thus is not held in a predetermined attitude by the balls, drops out of the endless circulation passage and thus the balls are clogged in the endless circulation passage.

Viewed from another aspect, the present invention provides a rolling guide apparatus comprising a pair of members which are moveable relative to each other through means of a plurality of balls located in an endless circulation passage, and a plurality of rolling element spacers interposed between mutually adjacent balls in said endless circulation passage,

characterised in that a diagonal dimension of each rolling element spacer in a thickness direction of the rolling element spacer is larger than an inner diameter of the endless circulation passage.

Embodiments of the invention will now be described, by way of example only, with reference to the accompanying drawings, wherein:

Fig. 1 is a side sectional view showing one embodiment of a ball screw device in which rolling element spacers according to an embodiment of the invention are arranged together with balls in an endless circulation passage;
Fig. 2 is a front sectional view of the ball screw device shown in Fig. 1;
Fig. 3 is a perspective view showing relative positions between balls and an embodiment of rolling element spacer in an endless circulation passage;
Fig. 4 is a view clearly showing various dimensions which will be defined herein;
Fig. 5 is a sectional view showing a state in which a rolling element spacer in accordance with an embodiment of the invention is slanted in the endless circulation passage;
Fig. 6 is an explanatory view showing a dimensional relation for computing the maximum outer diameter $\phi d$ of a rolling element spacer having an outer peripheral face in a cylindrical form;
Fig. 7 is a view showing a right-angled triangle derived from the dimensional relation of Fig. 6;
Fig. 8 is a sectional view showing an example in which the outer peripheral face of a rolling element spacer in accordance with an embodiment of the invention is formed in the form of a concave surface;
Fig. 9 is a sectional view showing a contact state between a rolling element spacer whose outer peripheral face is formed in a concave form and an inner wall of an endless circulation passage;
Fig. 10 is an explanatory view showing a dimensional relation for computing a correction value $\Delta d$ of the maximum outer diameter of a rolling element spacer having an outer peripheral face in a concave form;
Fig. 11 is a view showing a right-angled triangle derived from the dimensional relation of Fig. 10;
Fig. 12 is a sectional view showing a state in which conventional rolling element spacers and balls are arranged without gaps in an endless circulation passage; and
Fig. 13 is a view showing a problem in a case in which a gap is generated between a conventional rolling element spacer and balls, which are arranged in an endless circulation passage.

Embodiments of rolling element spacer according to an embodiment of the invention are explained in detail hereinafter on the basis of the attached drawings.

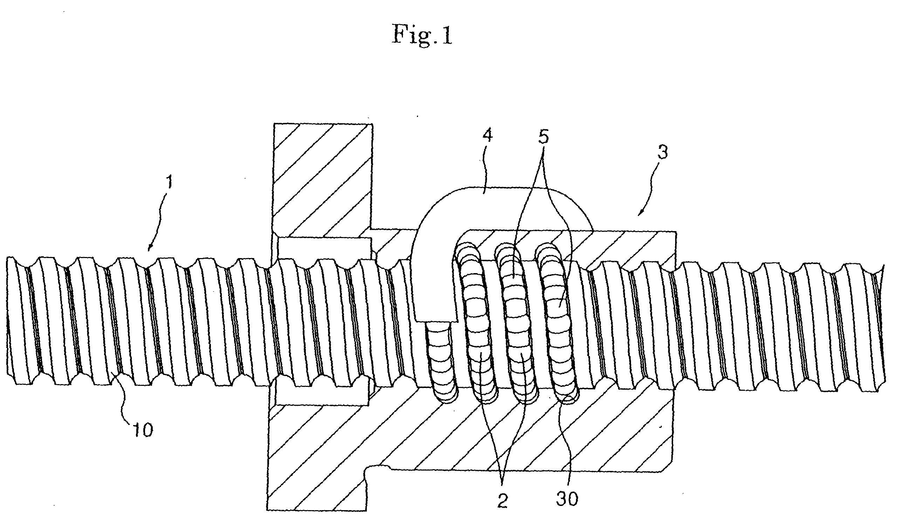

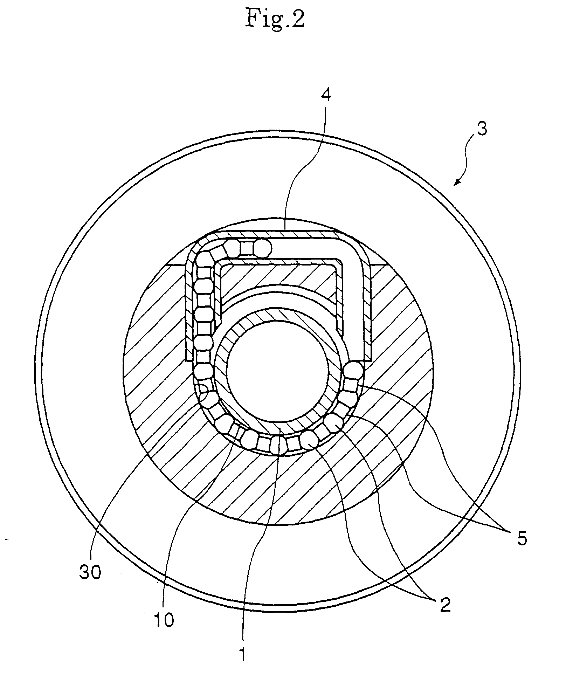

Fig. 1 and Fig. 2 show one embodiment of a ball screw device in which the rolling element spacers in accordance with an embodiment of the invention are arranged together with balls in an endless circulation passage. In these drawings, the reference numeral 1 denotes a screw shaft, the reference numeral 2 a ball and the reference numeral 3 a nut member, and the nut member 3 meshes with the screw shaft 1 through many balls 2.

A spiral ball rolling groove 10 is formed in an outer periphery face of the screw shaft 1, while a spiral load rolling groove 30 facing the ball rolling groove 10 of the screw shaft 1 is formed in an inner periphery face of the nut member 3, and the ball rolling groove 10 and the load rolling groove 30 form a spiral load ball passage between the screw shaft 1 and the nut member 3. That is, if a relative rotary motion occurs between the screw shaft 1 and the nut member 3, the balls 2 spirally roll in the load ball passage while bearing a load. Further, a return pipe 4 mutually communicating both ends of the load ball passage to thereby constitute an endless circulation passage for the balls 2 is attached to the nut member 3, so that a ball 2 having finished rolling in the load ball passage and having been released from the load comes into a no-load state and rolls in the return pipe 4, and is returned to an inlet of the load ball passage while jumping the ball rolling groove 10 by several turns. Accordingly, if the screw shaft 1 and the nut member 3 are relatively rotated, it follows that the balls 2 roll from the load ball passage to the return pipe 4 and from the return pipe 4 to the load ball passage, and are circulated inside the endless circulation passage constituted by the load ball passage and the return pipe 4.

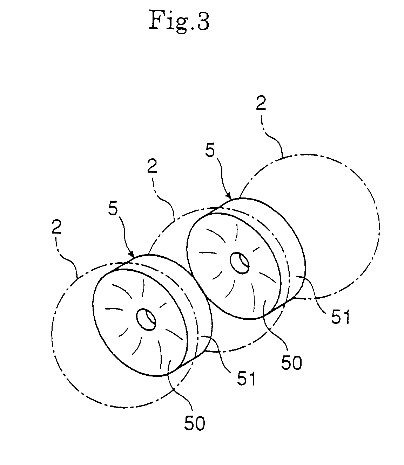

In this ball screw device, in order to prevent the balls 2 incorporated in the endless circulation passage from mutually contacting, a rolling element spacer 5 is interposed between each two mutually adjoining balls 2, 2. As shown in Fig. 3, each rolling element spacer 5 is formed by deforming a synthetic resin into an approximately disk form and, in both its front/rear faces, there are respectively formed spherical faces 50 on which the balls 2 slide. The balls 2 and the rolling element spacers 5 are alternately arranged in the endless circulation passage. By this, it is achieved that the balls 2 rolling in the endless circulation passage are prevented from mutually contacting, a smooth circulation of the balls 2 and, in turn, smoothening of the rotary motion of the nut member 3 relative to the screw shaft 1 are intended, and additionally a generation of noise owing to a collision between the balls during operation of the ball screw device is reduced.

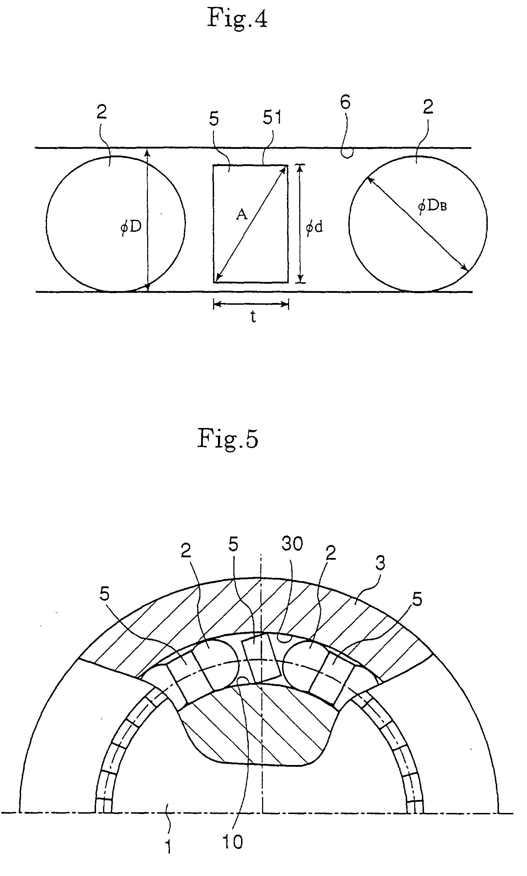

As shown in Fig.4, each rolling element spacer 5 is formed such that --when it is supposed that t is a thickness in an axial direction of the rolling element spacer between both front/rear faces in which the spherical face seats 50 are formed and $\phi d$ is an outer diameter of the rolling element spacer-- a diagonal dimension A, in a thickness direction, expressed by $\sqrt{(d^2 + t^2)}$ becomes larger than an inner diameter $\phi D$ of the endless circulation passage 6 for the balls 2. That is, the thickness t and the outer diameter $\phi d$ of the rolling element spacer are set such that $\phi D < A = \sqrt{(d^2 + t^2)}$ is met. Therefore, the arrangement is such that even in case that a gap is generated between a ball 2 and a rolling element spacer 5 in the endless circulation passage 6 and thus the rolling element spacer 5 slants without being supported in a predetermined attitude by the balls 2, since periphery edges of the rolling element spacer 5 formed in the disk-like form are locked by inner walls of the endless circulation passage as shown in Fig. 5, a problem that the rolling element spacer 5 falls sideways in the endless circulation passage 6 is prevented.

Here, since the diagonal dimension A of the rolling element spacer 5 is determined by the thickness t and the outer diameter $\phi d$ of the rolling element spacer 5, it follows that, in order to make the diagonal dimension A larger than the outer diameter $\phi D$, the thickness t or the outer diameter $\phi d$ may be set large. However, in case that the thickness of the rolling element spacer 5 is set large, it follows that the number of the balls 2 in the endless circulation passage 6 is reduced correspondingly. Accordingly, in order to avoid a reduction in rated load of the ball screw device and avoid the device concerned from becoming large, it is preferable to set the thickness t small within such a range that the mutually adjoining balls 2 do not contact.

On the other hand, it is necessary that the outer diameter $\phi d$ of each rolling element spacer 5 is smaller than a ball diameter $\phi D_B$ and, even if the outer diameter $\phi d$ is relatively large in this range, basically there is no problem. However, as shown in Fig. 2, in the ball screw, since the balls 2 and the rolling element spacers 5 spirally circulate around the screw shaft 1, in case that the outer diameter $\phi d$ of a rolling element spacer 5 is too large, there is a drawback that the outer peripheral face 51 of such rolling element spacer 5 interferes with the ball rolling groove 10 of the screw shaft 1. Further, also in another rolling guide device other than the ball screw, a linear guide device for instance, since a curved portion necessarily exists in the endless circulation passage, in a case in which the outer diameter $\phi d$ of a rolling element spacer 5 is too large, there is also a drawback that the outer peripheral face 51 of such rolling element spacer 5 interferes with a wall on the inner diameter side of the endless circulation passage. Accordingly, in order to avoid such an interference between a rolling element spacer 5 and the inner wall of the endless circulation passage to thereby achieve a smooth ball circulation, it is necessary to limit a maximum value of the outer diameter $\phi d$ of the rolling element spacer 5 according to a relation with a radius of curvature of the curved portion in the endless circulation passage.

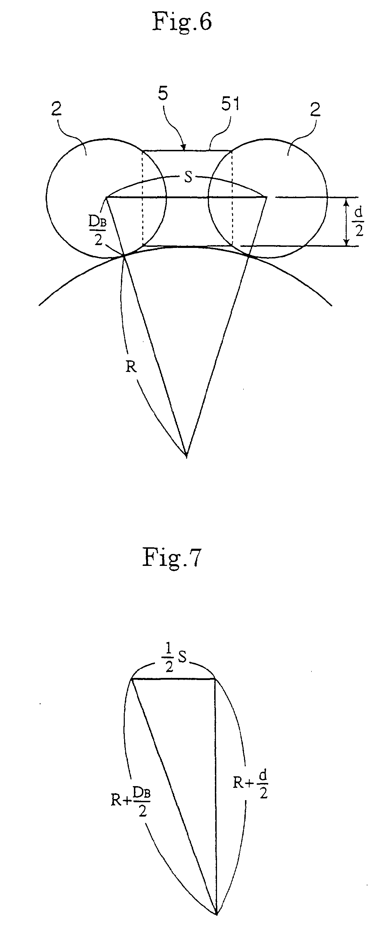

Here, as shown in Fig.6, if it is supposed that $D_B$ is an outer diameter of a ball 2, S an inter-center distance between mutually adjoining balls 2, 2, R a radius of curvature of an inner diameter side of the endless circulation passage through which the balls 2 circulate and d an outer diameter of a rolling element spacer 5, and if it is imagined that an outer peripheral face of the rolling element spacer 5 contacts with an inner wall of the endless circulation passage, it is possible to derive a right-angled triangle having such a dimensional relation as shown in Fig. 7. Accordingly, from the dimensional relation of this triangle, the following equation is established.

$$(R + D_B/2)^2 = (S/2)^2 + (R + d/2)^2$$

And, if d is derived from this equation, it becomes as follows.

$$d\ (d_{max}) = \sqrt{\{(2R + D_B)^2 - S^2\}} - 2R \qquad \text{(Equation 1)}$$

Incidentally, since the outer peripheral face 51 of the rolling element spacer 5 is liable to interfere with the inner wall of the endless circulation passage as the radius of curvature in the curved portion of the endless circulation passage becomes small, R used in the Equation 1 is a minimum radius of curvature in the endless circulation passage.

Since this Equation represents a state in which the outer peripheral face 51 of a rolling element spacer 5 contacts with the inner wall of an endless circulation passage, i.e., a maximum value $d_{max}$ of the outer diameter of the rolling element spacer 5, in order to prevent the rolling element spacer 5 from interfering with the endless circulation passage, the outer diameter d of the rolling element spacer 5 must be smaller than this $d_{max}$. That is, if

$$d < d_{max} = \sqrt{\{(2R + D_B)^2 - S^2\}} - 2R \qquad \text{(Equation 2)}$$

is met, the rolling element spacer 5 can smoothly circulate in the endless circulation passage with the balls 2 without interfering with the inner wall of the endless circulation passage.

Accordingly, on setting the diagonal dimension A of the rolling element spacer 5 larger than the inner diameter $\phi D$ of the endless circulation passage, it is preferable to set the outer diameter $\phi d$ of the rolling element spacer 5 as large as possible within a range determined by the Equation 2, and to set the thickness t small. By this, it is possible for the endless circulation passage to arrange the balls 2 in the maximum number while preventing the rolling element spacer 5 from interfering with the endless circulation passage.

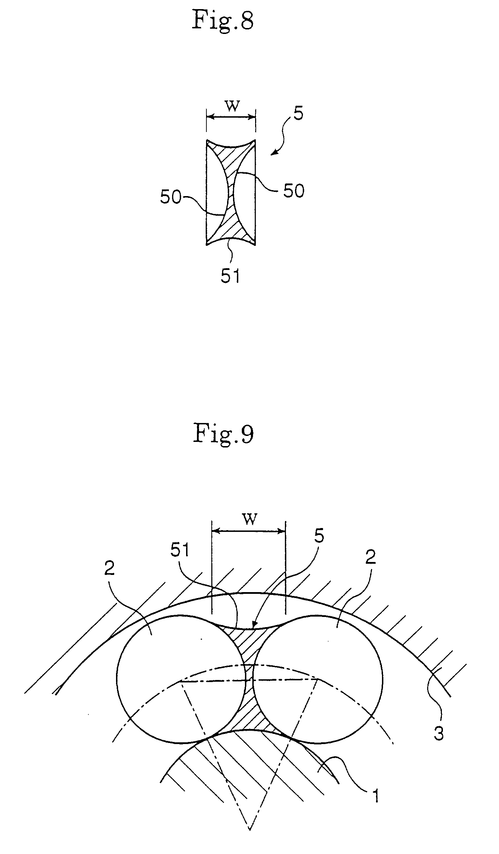

Further, as to the Equation 2, there is imagined a case in which the outer peripheral face 51 of the rolling element spacer 5 is formed in a cylindrical form. However, as shown in Fig. 8 and Fig. 9, in a case in which the outer peripheral face 51 of the rolling element spacer 5 is formed in a concave form, since it becomes correspondingly difficult for the outer peripheral face 51 of the rolling element spacer 5 to interfere with the inner wall of the endless circulation passage, it becomes possible to set the outer diameter of the rolling element spacer 5 slightly larger than the aforesaid $d_{max}$. Accordingly, in this case, it is necessary to add a correction value $\Delta d$ to the aforesaid $d_{max}$.

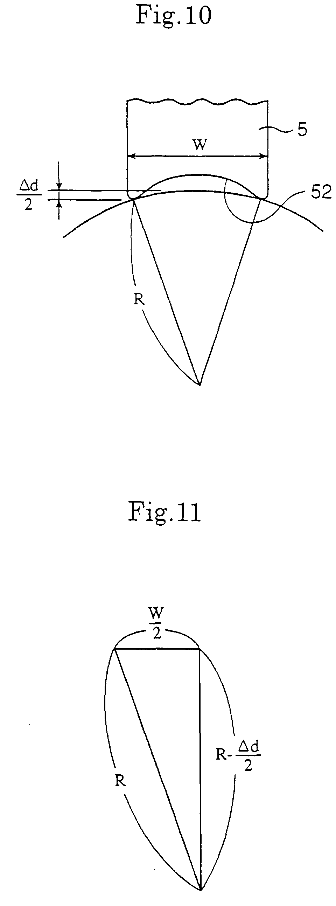

Here, as shown in Fig. 10, if it is supposed that W is a width of a recessed portion 52 formed in the outer peripheral face 51 of a rolling element spacer 5, $\Delta d/2$ a height of an inner wall of the endless circulation passage, protruding into the recessed portion 52 and, similarly to the previous calculation, R the radius of curvature of the inner diameter side of the endless circulation passage, it is possible to derive a right-angled triangle of such a dimensional relation as shown in Fig. 11. Accordingly, from the dimensional relation of this triangle, the following equation is established.

$$R^2 = (W/2)^2 + (R - \Delta d/2)^2 \qquad \text{(Equation 3)}$$

And, if $\Delta d$ is derived from this equation, it becomes as follows.

$$\Delta d = 2R - \sqrt{(4R^2 - W^2)} \qquad \text{(Equation 4)}$$

And, in a case in which a recessed portion 52 exists in the outer peripheral face 51 of a rolling element spacer 51 in this manner, if the maximum outer diameter $\phi d$ of the rolling element spacer 5 is smaller than a value obtained by adding the correction value $\Delta d$ to $d_{max}$ prescribed by the aforesaid Equation 2, i.e., if

$$\phi d < d_{max} + 2R - \sqrt{(4R^2 - W^2)} \qquad \text{(Equation 5)}$$

is met, the outer peripheral face 51 of the rolling element spacer 5 is prevented from interfering with the inner wall of the endless circulation passage.

Accordingly, in a case in which a recessed portion 52 is formed in an outer peripheral face 51 of a rolling element spacer 5, it is possible to set the outer diameter of the rolling element spacer 5 larger by the aforesaid $\Delta d$ than the case where the outer peripheral face 51 is formed merely in a cylindrical form. Therefore, on determining the diagonal dimension A, by correspondingly reducing the thickness t of the rolling element spacer 5, the number of the balls 2 in the endless circulation passage can be increased, so that it is possible to increase a rated load of the ball screw device by a more compact constitution and prevent the rolling element spacer 5 from falling sideways in the endless circulation passage.

## Claims

1. A rolling element spacer for use in a rolling guide device in which a pair of members perform relative motion through an endlessly circulating row of balls (2), the rolling element spacer being interposed in use between mutually adjoining balls (2) in an endless circulation passage (6), and circulating together with the balls (2),

   **characterized in that** a diagonal dimension (A) of the rolling element spacer in a thickness direction thereof is larger than an inner diameter ($\phi D$) of the endless circulation passage (6).

2. A rolling element spacer set forth in claim 1, **characterized in that** when $D_B$ is defined as a ball diameter, S is defined as an inter-center distance of the mutually adjoining balls (2) with the rolling element spacer interposed therebetween and R is a minimum radius of curvature of the endless circulation passage (6) through which the balls (2) circulate in use, an outer diameter d of the rolling element spacer meets the following equation

$$d < \sqrt{\{(2R + D_B)^2 - S^2\}} - 2R = d_{max}.$$

3. A rolling element spacer set forth in claim 2, **characterized in that** an outer peripheral face (51) thereof is formed in a concave form, and when W is defined as a width of its concave portion, the outer diameter d of the rolling element spacer meets the following equation

$$d < d_{max} + 2R - \sqrt{(4R^2 - W^2)}.$$

4. A rolling guide apparatus comprising a pair of members which are moveable relative to each other through means of a plurality of balls (2) located in an endless circulation passage (6), and a plurality of rolling element spacers (5) interposed between mutually adjacent balls (2) in said endless circulation passage (6),

   **characterised in that** a diagonal dimension (A) of each rolling element spacer (5) in a thickness direction of the rolling element spacer (5) is larger than an inner diameter ($\phi D$) of the endless circulation passage (6).

5. A rolling guide apparatus as claimed in claim 4, further **characterized in that** when $D_B$ is defined as a ball diameter, S is defined as an inter-center distance of the mutually adjoining balls (2) with the rolling element spacer interposed therebetween and R is a minimum radius of curvature of the endless circulation passage (6) through which the balls (2) circulate in use, an outer diameter d of the rolling element spacer meets the following equation

$$d < \sqrt{\{(2R + D_B)^2 - S^2\}} - 2R = d_{max}.$$

6. A rolling guide apparatus as claimed in claim 4 or 5, further **characterized in that** an outer peripheral face (51) of each said rolling element spacer (5) is formed in a concave form, and when W is defined as a width of its concave portion, the outer diameter d of the rolling element spacer meets the following equation

$$d < d_{max} + 2R - \sqrt{(4R^2 - W^2)}.$$

7. A rolling element spacer for use in a rolling guide device in which a pair of members perform relative motion through means of a plurality of balls (2) located in an endless circulation passage (6), the rolling element spacer being adapted to be interposed in use between mutually adjacent balls (2) in a said endless circulation passage (6),

wherein the rolling element spacer has a generally disk like form with substantially spherical recesses (50) in the front and rear faces thereof to accommodate said balls (2) slidingly in use, **characterised in that** a diagonal dimension (A) of the rolling element spacer between a circumferential periphery of the rolling element spacer towards a front end thereof and a circumferential periphery of the rolling element spacer towards a rear end thereof, intersecting the axis of said rolling element spacer, is larger than a diameter corresponding to twice the radius of curvature of said substantially spherical recesses (50) in said front and rear faces of the rolling element spacer.

Fig.1

EP 1 138 965 A1

## Fig.2

Fig.3

Fig.4

Fig.5

# Fig.6

# Fig.7

## Fig.8

## Fig.9

## Fig.10

## Fig.11

Fig.12

Fig. 13

**European Patent Office**

**EUROPEAN SEARCH REPORT**

Application Number

EP 01 30 3135

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 99 60281 A (NIZEKI SHIN ;NSK LTD (JP); IKEDA NORIFUMI (JP)) 25 November 1999 (1999-11-25) * the whole document * | 1,4 | F16C33/38 |
| X | PATENT ABSTRACTS OF JAPAN vol. 1997, no. 01, 31 January 1997 (1997-01-31) & JP 08 232961 A (NIPPON SEIKO KK), 10 September 1996 (1996-09-10) * abstract * | 1,4 | |
| A | DE 199 25 040 A (NSK LTD) 9 December 1999 (1999-12-09) * the whole document * | 1,7 | |
| A | PATENT ABSTRACTS OF JAPAN vol. 2000, no. 02, 29 February 2000 (2000-02-29) & JP 11 315835 A (NIPPON SEIKO KK), 16 November 1999 (1999-11-16) * abstract * | 1,7 | |

TECHNICAL FIELDS SEARCHED (Int.Cl.7)

F16C
F16H

The present search report has been drawn up for all claims

| Place of search | Date of completion of the search | Examiner |
|---|---|---|
| BERLIN | 10 July 2001 | Hoffmann, M |

EPO FORM 1503 03.82 (P04C01)

## ANNEX TO THE EUROPEAN SEARCH REPORT
## ON EUROPEAN PATENT APPLICATION NO.

EP 01 30 3135

This annex lists the patent family members relating to the patent documents cited in the above-mentioned European search report.
The members are as contained in the European Patent Office EDP file on
The European Patent Office is in no way liable for these particulars which are merely given for the purpose of information.

10-07-2001

| Patent document cited in search report | | Publication date | Patent family member(s) | Publication date |
|---|---|---|---|---|
| WO 9960281 | A | 25-11-1999 | DE 19981108 T | 06-07-2000 |
| JP 08232961 | A | 10-09-1996 | NONE | |
| DE 19925040 | A | 09-12-1999 | JP 2000120825 A | 28-04-2000 |
| JP 11315835 | A | 16-11-1999 | NONE | |